(19) Europäisches Patentamt / European Patent Office / Office européen des brevets

(11) **EP 4 166 424 A1**

(12) **EUROPEAN PATENT APPLICATION**
published in accordance with Art. 153(4) EPC

(43) Date of publication:
**19.04.2023 Bulletin 2023/16**

(21) Application number: **20941501.7**

(22) Date of filing: **16.06.2020**

(51) International Patent Classification (IPC):
**B62D 15/02** (2006.01)        **B62D 5/04** (2006.01)

(52) Cooperative Patent Classification (CPC):
**B62D 5/04; B62D 15/02**

(86) International application number:
**PCT/CN2020/096281**

(87) International publication number:
**WO 2021/253212 (23.12.2021 Gazette 2021/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Unistrong Science & Technology Co., Ltd.**
**Beijing 100176 (CN)**

(72) Inventors:
• MCCLURE, John A.
  **Scottsdale AZ 85255 (US)**
• WU, Lin
  **Beijing 100176 (CN)**
• TANG, Lizheng
  **Beijing 100176 (CN)**
• GUO, Xinping
  **Beijing 100176 (CN)**

(74) Representative: **Patentanwaltskanzlei Matschnig & Forsthuber OG**
**Biberstraße 22**
**Postfach 36**
**1010 Wien (AT)**

(54) **METHOD FOR ACQUIRING VEHICLE STEERING ANGLE, APPARATUS, DEVICE, AND STORAGE MEDIUM**

(57)     A method for acquiring a vehicle steering angle, an apparatus, a device, and a storage medium, the method comprising: when a vehicle is traveling according to a preset mode, obtaining vehicle test data and calculating first vehicle steering angle data corresponding to each piece of vehicle test data; utilizing first steering wheel encoder data in the vehicle test data as well as corresponding first vehicle steering angle data and performing fitting, and obtaining a correspondence relationship between steering wheel encoder data and vehicle steering angle data; when the vehicle is traveling normally, obtaining second steering wheel encoder data; and subsequently obtaining second vehicle steering angle data corresponding to the second steering wheel encoder data according to the correspondence relationship between the steering wheel encoder data and the vehicle steering angle data. Consequently, the present method can save on costs of installation and maintenance of a steering angle sensor, improve the accuracy of vehicle steering angle data, and improve automated driving operating reliability.

Figure 2

**Description**

**FIELD**

The present disclosure relates to the technical field of automatic driving, and in particular to a method and an apparatus for acquiring a vehicle steering angle, a device, and a storage medium.

**BACKGROUND**

In order to achieve automatic driving of a vehicle, an auto-driving system needs to obtain a steering angle of the vehicle, and control the vehicle based on the obtained steering angle.

Conventionally, a steering angle sensor has to be installed in a steering structure outside the vehicle, for measuring and sending the steering angle of the vehicle to the auto-driving system. However, the steering angle sensor is apt to be damaged, which requires a high cost for installation and maintenance. In addition, a damaged steering angle sensor may cause that the auto-driving system cannot obtain the steering angle of the vehicle, thereby affecting the control of the auto-driving system over the vehicle, and reducing the operational reliability of the auto-driving system.

**SUMMARY**

In view of the above, a method and an apparatus for acquiring a vehicle steering angle, a device, and a storage medium are provided in embodiments of the present disclosure, with which the steering angle sensor is not required to be installed in the steering structure outside the vehicle. Hence, the problem of the high cost and low auto-driving security due to the steering angle sensor being apt to be damaged in the prior art is solved.

In order to solve the above problem, the following technical solutions are provided according to the embodiments of the present disclosure.

A method for acquiring a vehicle steering angle is provided. The method includes: acquiring test data of a vehicle while the vehicle travels in a preset travel manner, where the test data consists of multiple subsets each including a first steering wheel encoder value, a first vehicle speed, and a first vehicle steering angular rate; calculating, for each subset of the test data, a first vehicle steering angle corresponding to the subset; obtaining a corresponding relationship between a steering wheel encoder value and a vehicle steering angle by performing a fitting process on the first steering wheel encoder value in each subset of the test data and the first vehicle steering angle corresponding to the subset; acquiring a second steering wheel encoder value while the vehicle travels normally; and obtaining a second vehicle steering angle corresponding to the second steering wheel encoder value, based on the corresponding relationship between the steering wheel encoder value and the vehicle steering angle.

In a possible implementation, the acquiring test data of a vehicle while the vehicle travels in a preset travel manner includes: acquiring, while the vehicle travels in the preset travel manner, the first steering wheel encoder value generated by a steering wheel encoder, the first vehicle speed collected by a satellite positioning module, and the first vehicle steering angular rate collected by a gyro inertial sensor, where the first steering wheel encoder value, the first vehicle speed, and the first vehicle steering angular rate acquired at a same time instant constitute a subset of the test data.

In a possible implementation, the calculating, for each subset of the test data, a first vehicle steering angle corresponding to the subset includes: calculating a product of the first vehicle steering angular rate, a circular constant, and a distance between front and rear axles of the vehicle to obtain a first calculation result; multiplying the first vehicle speed by 360 to obtain a second calculation result; dividing the first calculation result by the second calculation result to obtain a third calculation result; and multiplying an arcsine of the third calculation result by 2 to obtain the first vehicle steering angle corresponding to the subset of the test data.

In a possible implementation, the method further includes: acquiring, while the vehicle travels normally, the second vehicle steering angle in a target time period, where a fluctuation of the second vehicle steering angle during the target time period is within a preset range; acquiring a second vehicle speed and a second vehicle steering angular rate in the target time period; calculating a third vehicle steering angle based on the second vehicle speed and the second vehicle steering angular rate; and determining a vehicle steering angle correction amount based on the second vehicle steering angle in the target time period and the third vehicle steering angle.

In a possible implementation, the method further includes: correcting, at a time instant subsequent to the target time period, the second vehicle steering angle based on the vehicle steering angle correction amount.

In a possible implementation, the calculating a third vehicle steering angle based on the second vehicle speed and the second vehicle steering angular rate includes: calculating a product of the second vehicle steering angular rate, a circular constant and a distance between front and rear axles of the vehicle to obtain a fourth calculation result; multiplying the second vehicle speed by 360 to obtain a fifth calculation result; dividing the fourth calculation result by the fifth calculation result to obtain a sixth calculation result; and multiplying an arcsine of the sixth calculation result by 2 to obtain the third vehicle steering angle.

In a possible implementation, the method further includes: triggering a steering wheel limit signal when determining that an absolute value of the second vehicle steering angle is greater than a preset threshold.

An apparatus for acquiring a vehicle steering angle is provided. The apparatus includes: a first acquisition unit, configured to acquire test data of a vehicle while the vehicle travels in a preset travel manner, where the test data consists of multiple subsets each including a first steering wheel encoder value, a first vehicle speed, and a first vehicle steering angular rate; a first calculation unit, configured to calculate, for each subset of the test data, a first vehicle steering angle corresponding to the subset; a fitting unit, configured to use the first steering wheel encoder value in each subset of the test data and the first vehicle steering angle corresponding to the subset to fit the corresponding relationship between a steering wheel encoder and a vehicle steering angle; a second acquisition unit, configured to acquire a second steering wheel encoder value while the vehicle travels normally; and a second calculation unit, configured to obtain a second vehicle steering angle corresponding to the second steering wheel encoder value, based on the corresponding relationship between the steering wheel encoder value and the vehicle steering angle.

A device for acquiring a vehicle steering angle is provided. The device includes a memory, a processor, and a computer program stored in the memory and executable by the processor. The processor is configured to execute the computer program to perform the method for acquiring a vehicle steering angle.

A computer-readable storage medium is provided. The computer-readable storage medium stores instructions. The instructions, when executed by a terminal device, cause the terminal device to perform the method for acquiring a vehicle steering angle.

As can be seen from the above, the embodiments of the present disclosure have the following beneficial effects.

In the method for acquiring a vehicle steering angle according to the embodiments of the present disclosure, the test data of the vehicle is acquired while the vehicle travels in the preset travel manner; for each subset of the test data, the first vehicle steering angle corresponding to the subset is calculated; the corresponding relationship between the steering wheel encoder value and the vehicle steering angle is obtained by performing a fitting process on the first steering wheel encoder value in each subset of the test data and the first vehicle steering angle corresponding to the subset; the second steering wheel encoder value is acquired while the vehicle travels normally; and the second vehicle steering angle corresponding to the second steering wheel encoder value is obtained based on the corresponding relationship between the steering wheel encoder value and the vehicle steering angle. According to the embodiments of the present disclosure, the corresponding relationship between the steering wheel encoder value and the vehicle steering angle is obtained by performing a fitting process on the acquired test data of the vehicle. The second steering wheel encoder value is obtained while the vehicle travels normally. Then the second vehicle steering angle is determined based on the obtained corresponding relationship. Hence, the second vehicle steering angle can be obtained in real time based on the second steering wheel encoder value, instead of measuring the steering angle of the vehicle through a steering angle sensor, so that error accumulation due to time integration can be avoided, achieving a high accuracy of the vehicle steering angle required by the auto-driving system. Thereby, the cost of installation and maintenance of the steering angle sensor can be saved, and the problem of possible failing to acquire the vehicle steering angle normally by an auto-driving system due to a fault of the steering angle sensor can be solved, improving the operational reliability of automatic driving.

**BRIEF DESCRIPTION OF THE DRAWINGS**

Figure 1 is a framework diagram of an exemplary application scenario of a method for acquiring a vehicle steering angle according to an embodiment of the present disclosure;

Figure 2 is a flowchart of a method for acquiring a vehicle steering angle according to an embodiment of the present disclosure;

Figure 3 is a schematic diagram of a preset travel manner of a vehicle according to an embodiment of the present disclosure;

Figure 4 is a schematic diagram of a linear fitting process performed on a first steering wheel encoder values and a first vehicle steering angles corresponding to the first steering wheel encoder values according to an embodiment of the present disclosure;

Figure 5 is a flowchart of a method for acquiring a vehicle steering angle according to another embodiment of the present disclosure;

Figure 6 is a schematic diagram of correction of a second vehicle steering angle according to an embodiment of the present disclosure; and

Figure 7 is a schematic structural diagram of an apparatus for acquiring a vehicle steering angle according to an embodiment of the present disclosure.

DETAILED DESCRIPTION

Hereinafter the embodiments of the present disclosure are described in further detail in combination with the drawings and specific implementations, in order to make the above objective, features and advantages of the present disclosure more obvious and understandable.

In order to facilitate understanding and interpretation of the technical solution provided in the embodiments of the present disclosure, a background of the present disclosure is described first.

By studying conventional methods for acquiring a vehicle steering angle, it is found that conventionally the vehicle steering angle is obtained through a steering angle sensor. The steering angle sensor is installed in a steering structure outside a vehicle, so as to measure the steering angle of the vehicle. The acquired steering angle is sent to an auto-driving system, so that the auto-driving system can control the vehicle based on the steering angle of the vehicle. Since the steering angle sensor is installed in the steering structure outside the vehicle, and an environment where the vehicle travels is poor, the steering angle sensor is apt to be damaged, which may cause that the auto-driving system cannot obtain the steering angle of the vehicle, thereby affecting the normal control of the auto-driving system on the vehicle.

Based on this, a method for acquiring a vehicle steering angle is provided in an embodiment of the present disclosure. Test data of the vehicle is acquired while the vehicle travels in a preset travel manner. For each subset of the test data, a first vehicle steering angle corresponding to the subset is calculated. A corresponding relationship between a steering wheel encoder value and a vehicle steering angle is obtained by performing a fitting process on the first steering wheel encoder value in each subset of the test data and the first vehicle steering angle corresponding to the subset. A second steering wheel encoder value is acquired while the vehicle travels normally. A second vehicle steering angle corresponding to the second steering wheel encoder value is obtained based on the corresponding relationship between the steering wheel encoder value and the vehicle steering angle. In this way, the second vehicle steering angle can be obtained from the second steering wheel encoder value, without requiring a steering angle sensor for measuring the vehicle steering angle. Hence, not only the problem that the steering angle of the vehicle cannot be obtained due to a damage of the steering angle sensor can be avoided, but also the cost of installation and maintenance can be reduced.

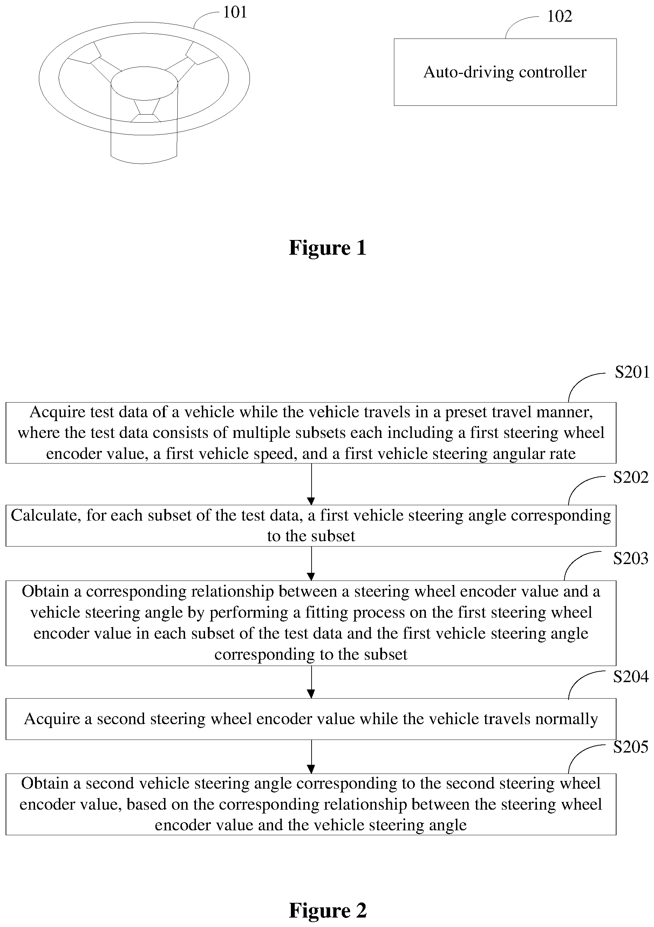

In order to facilitate understanding of the method for acquiring a vehicle steering angle provided by the embodiments of the present disclosure, an application scenario of the method is described first. Reference is made to Figure 1, which is a frame diagram of an exemplary application scenario of a method for acquiring a vehicle steering angle according to an embodiment of the present disclosure. The method is applicable to an auto-driving system.

In practice, the auto-driving system may include a steering wheel encoder 101 in an electric steering wheel, and an auto-driving controller 102. While the vehicle travels in a preset travel manner, first vehicle steering angles may be calculated through the auto-driving controller 102, and first steering wheel encoder values may be acquired through the steering wheel encoder 101. A corresponding relationship between a steering wheel encoder value and a vehicle steering angle is obtained by performing a fitting process on the first vehicle steering angles and the first steering wheel encoder values. A second steering wheel encoder value may be obtained from the steering wheel encoder 101 while the vehicle travels normally, and a second vehicle steering angle corresponding to the second steering wheel encoder value may be obtained based on the corresponding relationship between the steering wheel encoder value and the vehicle steering angle.

Those skilled in the art may understand that the frame diagram shown in Figure 1 is only an example for implementing the embodiments of the present disclosure, and the application of the embodiments of the present disclosure is not limited thereto.

In order to facilitate understanding of the technical solutions provided by the embodiments of the present disclosure, the method for acquiring a vehicle steering angle provided by the embodiments of the present disclosure are described below in combination with the drawings.

Reference is made to Figure 2, which is a flowchart of a method for acquiring a vehicle steering angle according to an embodiment of the present disclosure. As shown in Figure 2, the method may include steps S201 to S205.

In step S201, test data of a vehicle is acquired while the vehicle travels in a preset travel manner, where the test data consists of multiple subsets each including a first steering wheel encoder value, a first vehicle speed, and a first vehicle steering angular rate.

In an embodiment of the present disclosure, the vehicle steering angle is determined based on a corresponding relationship between a steering wheel encoder value and the vehicle steering angle. The corresponding relationship between the steering wheel encoder value and the vehicle steering angle needs to be determined before a normal travel of the vehicle.

It should be noted that in order to accurately determine the corresponding relationship between the steering wheel encoder value and the vehicle steering angle based on the test data, a travel manner may be preset for the vehicle so as to avoid that the test data acquired in an arbitrary travel of the vehicle cannot meet a requirement for determining the corresponding relationship between the steering wheel encoder value and the vehicle steering angle.

The preset travel manner is not limited by the embodiment of the present disclosure. In a possible implementation, the vehicle may travel along an "S" shaped driving route so as to obtain a large number of steering angles.

Specifically, the preset travel manner may be that: the vehicle first travels along a straight line, then turns the steering wheel toward a first direction by a certain angle and travels for a certain time period, and then turns the steering wheel to an opposite direction of the first direction by a certain angle and travels for a certain time period, so as to realize an "S" shaped traveling route, and finally returns to the original direction for straight driving.

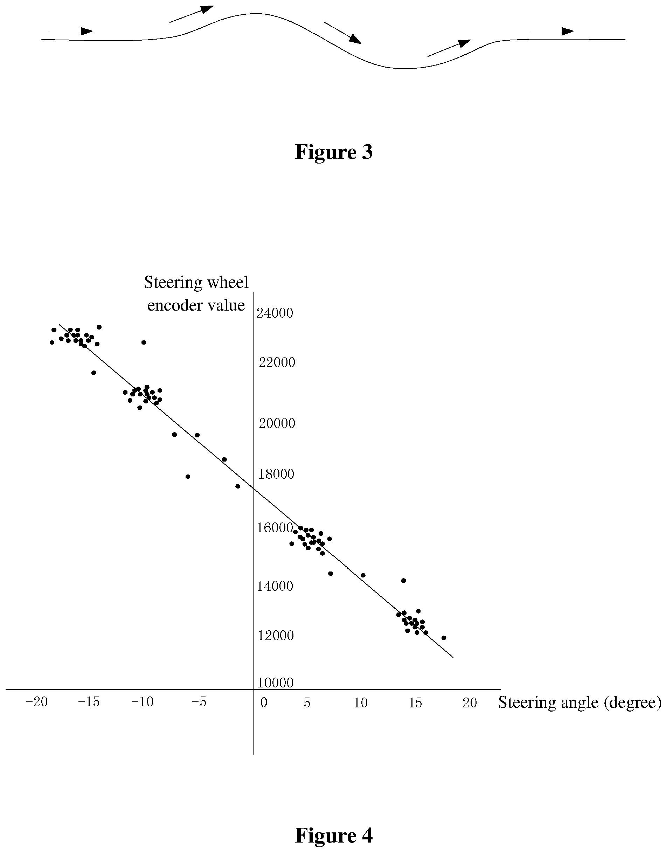

Reference is made to Figure 3, which is a schematic diagram of a preset travel manner of a vehicle according to an embodiment of the present disclosure. In the travel manner, the vehicle first travels along a straight line for 10 seconds, then turns a steering wheel by 10 degrees to the left and travels to the left for 10 seconds, then turns the steering wheel by 20 degrees to the right (which is equivalent to turning the steering wheel by 10 degrees to the right after the steering wheel is straighten) and travels to the right for 20 seconds, then turns the steering wheel by 20 degrees to the left (which is equivalent to turning the steering wheel by 10 degrees to the left after the steering wheel is straighten) and travels to the left for 10 seconds, and finally turns the steering wheel by 10 degrees to the right to return to the original direction for straight driving. It should be noted that, for the preset travel manner, the embodiments of the present disclosure do not limit time periods of various stages in the preset travel manner, magnitude of angles for adjusting the steering wheel, the number of times of adjusting the steering wheel, and an order of direction adjustments, which may be set based on an actual need. For example, the travel time periods at different stages may be more than 10 seconds and may be different from each other, the angles for adjusting the steering wheel may be 5 degrees, 10 degrees, 15 degrees, and the like.

Multiple subsets of the test data of vehicle are acquired while the vehicle travels in the preset travel manner. Each subset of the test data includes a first steering wheel encoder value, a first vehicle speed, and a first vehicle steering angular rate. In an example, the first steering wheel encoder value generated by a steering wheel encoder, the first vehicle speed collected by a satellite positioning module, and the first vehicle steering angular rate collected by a gyro inertial sensor may be acquired while the vehicle travels in the preset travel manner.

In order to clarify a correspondence among the first steering wheel encoder value, the first vehicle speed and the first vehicle steering angular rate, the first steering wheel encoder value, the first vehicle speed and the first vehicle steering angular rate collected at a same time instant may be grouped as a subset of the test data. The first steering wheel encoder value is generated by the steering wheel encoder, which has a corresponding relationship with a rotation angle of the steering wheel. The first vehicle speed is collected by the satellite positioning module and indicates a travel speed of the vehicle. The first vehicle steering angular rate is collected by the gyro inertial sensor and indicates an angular rate of rotation of a steering axle of the vehicle.

It can be understood that it is difficult to obtain an accurate corresponding relationship between the steering wheel encoder value and the vehicle steering angle based on merely a single set of the test data. The vehicle may be driven in the preset travel manner for multiple times, so as to obtain multiple sets of the test data correspondingly. Further, in order to reduce error of the acquired corresponding relationship between the steering wheel encoder value and the vehicle steering angle, the preset travel manner of the vehicle may be adjusted so as to obtain test data corresponding to different preset travel manner.

In step S202, for each subset of the test data, a first vehicle steering angle corresponding to the subset is calculated.

The first vehicle steering angle is calculated based on a subset of the test data. The first vehicle steering angle may be calculated based on the first vehicle steering angular rate and the first vehicle speed in the subset of the test data.

A calculation of the first vehicle steering angle corresponding to each subset of the test data includes steps A1 to A4.

In step A1, a product of the first vehicle steering angular rate, a circular constant, and a distance from between front and rear axles of the vehicle is calculated to obtain a first calculation result.

The first vehicle steering angular rate is from the test data, and the distance between front and rear axles of the vehicle refers to a distance between the front axle and the rear axle corresponding to the vehicle. The first calculation result may be expressed by formula (1):

$$ROT_1 \times PI \times WB_1 \qquad (1)$$

In formula (1), ROTi represents the first vehicle steering angular rate, PI represents the circular constant, and WBi represents the distance between front and rear axles of the vehicle.

In step A2, the first vehicle speed is multiplied by 360 to obtain a second calculation result.

The second calculation result may be expressed by formula (2):

$$360 \times VEL_1 \qquad (2)$$

In formula (2), VELi represents the first vehicle speed in a same subset of the test data as the first vehicle steering angular rate in A1.

In step A3, the first calculation result is divided by the second calculation result to obtain a third calculation result.

In step A4: an arcsine of the third calculation result is multiplied by 2 to obtain the first vehicle steering angle corresponding to the subset of the test data.

The first vehicle steering angle may be expressed by Formula (3):

$$2 \times \mathrm{asin}\left(\frac{ROT_1 \times PI \times WB_1}{360 \times VEL_1}\right) \qquad (3)$$

It should be noted that asin() represents an operation of calculating an arcsine value.

In step S203, a corresponding relationship between the steering wheel encoder value and the vehicle steering angle is obtained by performing a fitting process on the first steering wheel encoder value in each subset of the test data and the first vehicle steering angle corresponding to the subset.

The first vehicle steering angle may be calculated by using the first vehicle steering angular rate and the first vehicle speed. The corresponding relationship between the steering wheel encoder value and the vehicle steering angle may be obtained by using the first vehicle steering angle and the first steering wheel encoder value, where the first steering wheel encoder value is in the same subset of the test data as the first vehicle steering angular rate and the first vehicle speed.

The corresponding relationship between the steering wheel encoder value and the vehicle steering angle may be obtained by performing a fitting process on the first steering wheel encoder values and the corresponding first vehicle steering angles.

The fitting process is not limited in the embodiments of the present disclosure. In a possible implementation, a single-segment linear fitting may be performed on the first steering wheel encoder values and the corresponding first vehicle steering angles, to obtain a result, the corresponding relationship between the steering wheel encoder value and the vehicle steering angle is obtained according to the result. Reference is made to Figure 4, which is a schematic diagram of a linear fitting performed on first steering wheel encoder values and corresponding first vehicle steering angles according to an embodiment of the present disclosure. A coordinate system is established, in which a horizontal axis represents the steering angle and a vertical axis represents the steering wheel encoder value, and an original point indicates the steering angle of 0 and the steering wheel encoder value of 10000. The horizontal axis of the coordinate system represents the steering angle, and the vertical axis represents the steering wheel encoder value. Coordinate points are marked in the coordinate system based on the first steering wheel encoder values in the test data and the corresponding first vehicle steering angles. A fitting straight line is obtained by performing a linear fitting process on the coordinate points. The obtained fitting straight line represents the corresponding relationship between the steering wheel encoder value and the vehicle steering angle. In another possible implementation, a two-segment linear fitting or nonlinear fitting process may be performed using the first steering wheel encoder values and the corresponding first vehicle steering angles.

According to the embodiment of the present disclosure, the test data of the vehicle is acquired while the vehicle travels in a preset travel manner, and the corresponding relationship between the steering wheel encoder value and the vehicle steering angle is obtained based on the test data. Thereby, in a normal travel of the vehicle, the vehicle steering angle can be obtained based on the steering wheel encoder value using the corresponding relationship between the steering wheel encoder value and the vehicle steering angle. Hence, it is unnecessary to provide a steering angle sensor for obtaining the vehicle steering angle, so that the cost of installation and maintenance of the steering angle sensor is saved.

In step S204, a second steering wheel encoder value is acquired while the vehicle travels normally.

It should be noted that the normal travel of the vehicle refers to the running state of vehicle under non-test state. The second steering wheel encoder value is acquired while the vehicle travels normally. The second steering wheel encoder value may be generated by a steering wheel encoder while the vehicle travels normally.

In step S205, a second vehicle steering angle corresponding to the second steering wheel encoder value is obtained based on the corresponding relationship between the steering wheel encoder value and the vehicle steering angle.

The second vehicle steering angle corresponding to the second steering wheel encoder value may be obtained based on the determined corresponding relationship between the steering wheel encoder value and the vehicle steering angle, and the second steering wheel encoder value. The automatic driving state of the vehicle can be adjusted based on the second vehicle steering angle.

As can be seen from steps S201 to S205, the second steering wheel encoder value is acquired in the normal travel of the vehicle, and the second vehicle steering angle corresponding to the second steering wheel encoder value can be obtained based on the corresponding relationship between the steering wheel encoder value and the vehicle steering angle obtained by performing a fitting process on data obtained while the vehicle travels in the preset travel manner. Therefore, the steering angle of the vehicle can be obtained without a steering angle sensor. On one hand, the cost of installation and maintenance of the steering angle sensor is saved, and on the other hand, the problem of possible failing to acquire the vehicle steering angle due to a fault of the steering angle sensor is solved, so that the operational reliability of automatic driving is improved. In addition, the second vehicle steering angle can be obtained in real time by acquiring the second steering wheel encoder value. According to the embodiments of the present disclosure, the second vehicle steering angle is determined based on the corresponding relationship between the steering wheel encoder value and the vehicle steering angle, which does not involve a time factor, and thus there is no error accumulation caused by time integration. Hence, a high accuracy of the vehicle steering angle obtained based on the corresponding relationship between the steering wheel encoder value and the vehicle steering angle is achieved, meeting requirements of the auto-driving system for vehicle control.

It can be understood that there is an operating clearance in the steering structure of the vehicle. The steering structure may change to some extent after the vehicle is steered for a number of times, which results in a zero point offset between the steering wheel encoder value and the actual steering angle. Hence, a rotation angle of the vehicle represented by the second steering wheel encoder value acquired in the normal travel of the vehicle may be deviated, resulting in a deviation of the second vehicle steering angle obtained based on the second steering wheel encoder value from the actual vehicle steering angle.

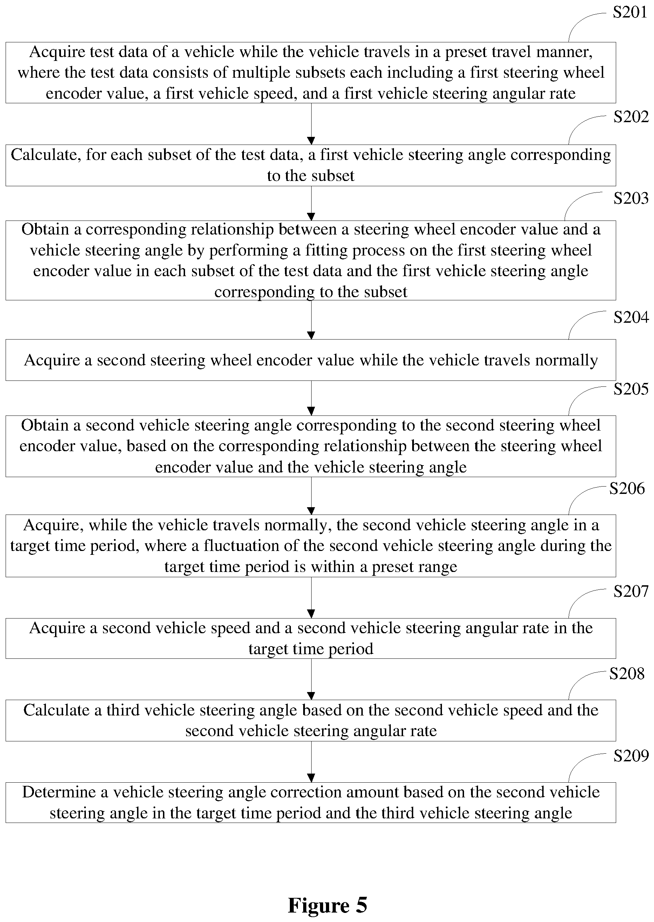

Based on the above, a method for obtaining a correction for a zero point offset of a vehicle steering angle is further provided in an embodiment of the present disclosure. Reference is made to Figure 5, which is a flowchart of a method for acquiring a vehicle steering angle according to another embodiment of the present disclosure. As shown in Figure 5, the method further includes steps S206 to S209 in addition to the above steps S201 to S205.

In step S206, the second vehicle steering angle in a target time period is acquired while the vehicle travels normally, where a fluctuation of the second vehicle steering angle during the target time period is within a preset range.

In order to correct the zero point offset of the vehicle steering angle in the normal travel of the vehicle in a real time manner, the target time period is determined, and the second vehicle steering angle in the target time period is acquired for correcting the vehicle steering angle in a subsequent process. The second vehicle steering angle may be obtained based on the steering wheel encoder value acquired in the target time period and the corresponding relationship between the steering wheel encoder value and the vehicle steering angle.

It should be noted that the target time period may be a time period having a length less than or equal to a time length threshold. In addition, the second vehicle steering angle may fluctuate under the effect of vehicle steering. In order to achieve a real time correction of the vehicle steering angle and improve the accuracy of the corrected vehicle steering angle, the fluctuation of the second vehicle steering angle during the target time period should be within the preset range. By using the stable second vehicle steering angle during the target time period, the accuracy of the corrected vehicle steering angle is improved.

In an example, the target time period may be determined based on the time length threshold and the preset range of the fluctuation of the second vehicle steering angle during the target time period. In a possible implementation, considering data continuity of the second vehicle steering angle and the real-time correction, the target time period may be determined through a sliding window method. A time gap between adjacent sliding windows is not limited here, and may be set based on requirements of correcting the second vehicle steering angle.

For example, a length threshold of the sliding window is set to be 3 seconds, and the preset range of the fluctuation of the second vehicle steering angle is $\pm 2$ degrees. In a case that the fluctuation of the second vehicle steering angle is less than 2 degrees during a time period from 0 to the 3rd second, the time period from 0 to the 3rd second is determined as a first target time period. The 3-second sliding window slides by 0.5 seconds each time. After each sliding of the sliding window, the second vehicle steering angle in the sliding window is the second vehicle steering angle in a target time period corresponding to the sliding window. In a case that the fluctuation of the second vehicle steering angle is greater than 2 degrees at the 4th second, the sliding window continues to move with time. In a case that the fluctuation of the second vehicle steering angle is less than or equal to 2 degrees during a time period from the 4th second to the 7th second, the time period from the 4th second to the 7th second is determined as another target time period. The process is repeated to update the target time period with time.

In step S207, a second vehicle speed and a second vehicle steering angular rate in the target time period are acquired.

In addition to the second vehicle steering angle in the target time period, the second vehicle speed and the second vehicle steering angular rate in the target time period are acquired. The second vehicle speed may be collected through a satellite positioning module, and the second vehicle steering angular rate may be collected through a gyro inertial sensor. It can be understood that there is a correspondence among the second vehicle steering angle, the second vehicle speed, and the second vehicle steering angular rate which are acquired during a same target time period.

In step S208, a third vehicle steering angle is calculated based on the second vehicle speed and the second vehicle steering angular rate.

The third vehicle steering angle may be calculated based on the acquired second vehicle speed and the second vehicle steering angular rate. The calculated third vehicle steering angle is more accurate, and may be used for correcting the second vehicle steering angle.

The third vehicle steering angle may be calculated by formula (4):

$$2 \times \operatorname{asin}\left(\frac{ROT_2 \times PI \times WB_2}{360 \times VEL_2}\right) \qquad (4)$$

In formula (4), a product of the second vehicle steering angular rate $ROT_2$, the circular constant PI, and the distance $WB_2$ between front and rear axles of the vehicle, i.e, $ROT_2 \times PI \times WB_2$, is referred to as a fourth calculation result. The distance between front and rear axles of the vehicle refers to a distance between the front axle and the rear axle corresponding to the vehicle. In addition, a fifth calculation result is obtained by multiplying the second vehicle speed

$$\frac{ROT_2 \times PI \times WB_2}{360 \times VEL_2}$$

$VEL_2$ by 360, i.e., $360 \times VEL_2$. A sixth calculation result, i.e., , is obtained by dividing the fourth calculation result by the fifth calculation result. Finally, the third vehicle steering angle is obtained by multiplying an arcsine value of the sixth calculation result by 2.

In step S209, a vehicle steering angle correction amount is determined based on the second vehicle steering angle in the target time period and the third vehicle steering angle.

The vehicle steering angle may be corrected based on the second vehicle steering angle acquired in the target time period and the third vehicle steering angle calculated correspondingly. In a possible implementation, a difference between the third vehicle steering angle and the second vehicle steering angle may be used to calculate the vehicle steering angle correction amount. For example, an average of the third vehicle steering angles during the target time period and an average of the second vehicle steering angles during the same target time period may be calculated, and a difference between the average of the third vehicle steering angles and the average of the second vehicle steering angles may be determined as the vehicle steering angle correction amount. In another possible implementation, an average of differences between the third vehicle steering angle and the second vehicle steering angle at various time instants may be determined as the vehicle steering angle correction amount.

According to the embodiments of the present disclosure, the second vehicle steering angle, the second vehicle speed, and the second vehicle steering angular rate in the target time period are acquired, and the third vehicle steering angle is used as a target for the correction, to obtain the vehicle steering angle correction amount. The second vehicle steering angle may be corrected based on the vehicle steering angle correction amount, to obtain a more accurate vehicle steering angle. Hence, a deviation of the second vehicle steering angle due to an offset between the steering wheel encoder value and an actual steering angle of the vehicle is corrected.

Further, the second vehicle steering angle acquired at a time instant subsequent to the target time period may be corrected by using the obtained vehicle steering angle correction amount.

For example, at a time instant subsequent to the target time period, the second vehicle steering angel may be corrected based on the vehicle steering angle correction amount.

It should be noted that the time instant subsequent to the target time period may be a time instant in a next target time period after the target time period. That is, the second vehicle steering angle in a current target time period may be corrected by using a vehicle steering angle correction amount obtained in a previous target time period.

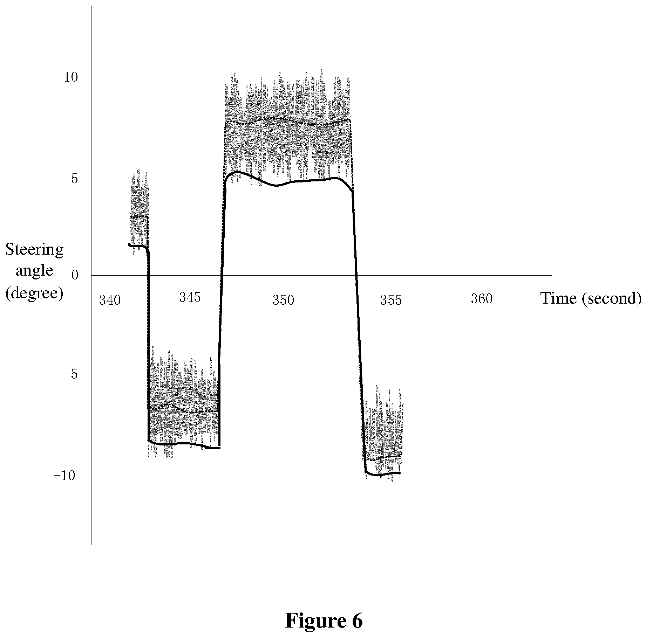

Reference is made to Figure 6, which is a schematic diagram of correction of a second vehicle steering angle according to an embodiment of the present disclosure.

As shown in Figure 6, a coordinate system is established, in which a horizontal axis represents time and a vertical axis represents the steering angle. The second vehicle steering angle and the third vehicle steering angle in various target time periods are represented in the coordinate system. As shown in Figure 6, in the coordinate system, a black solid line represents the second vehicle steering angle, a gray solid line represents the third vehicle steering angle, and a black dotted line represents the corrected second vehicle steering angle. A preset range of the fluctuation is set to be $\pm 1$ degree, and a time period threshold is 4 seconds. A time period from the 342nd second to the 343rd second is a first target time period. Since fluctuation at the 343rd second exceeds the range of $\pm 1$ degree, the sliding window is re-created starting from the 343rd second, obtaining a second target time period from the 343rd second to the 347th second. Since fluctuation at the 347th second exceeds the range of $\pm 1$ degree, the sliding window is re-created starting from the 347th second, obtaining a sliding window from the 347th second to the 351st second. The sliding window slides to the right over time. Supposing that the sliding window is moved at an interval of 1 second, a third target time period from the 347th second to the 351st second, a fourth target time period from the 348th second to the 352nd second, and a fifth target time period from the 349th second to the 353rd second are obtained. Since fluctuation at the 353rd second exceeds $\pm 1$ degree, the sliding window is re-created starting from the 353rd second, obtaining a sixth target time period from the 353rd second to the 356th second. In a process of correcting the second vehicle steering angle, a second vehicle steering angle in the second target time period is corrected based on the vehicle steering angle correction amount in the first target time period. Then a vehicle steering angle correction amount in the second target period is obtained based on the second vehicle steering angle and a corresponding third vehicle steering angle in the second target period. Then a second vehicle steering angle in the third target time period is corrected based on the vehicle steering angle correction amount in the second target time period. The process is repeated to complete the correction of the second vehicle steering angle in all target time periods.

According to the embodiment of the present disclosure, the second vehicle steering angle in a current target time period is corrected using the vehicle steering angle correction amount obtained in a previous target time period, so that the second vehicle steering angle can be corrected timely. Since the vehicle steering angle correction amount is from an immediately previous target time period, the real-time performance is high, and the correction is more accurate.

In addition, a rotation angle of the steering wheel may be limited.

The method may further include a step of triggering a steering wheel limit signal when determining that an absolute value of the second vehicle steering angle is greater than a preset threshold.

The second vehicle steering angle may be obtained based on the second steering wheel encoder value and the corresponding relationship between the steering wheel encoder value and the vehicle steering angle. The second vehicle steering angle may indicate a current steering angle size of the vehicle. In order to prevent an abnormal control caused by an excessive vehicle steering angle, a preset threshold may be set for the vehicle steering angle. Then, it is determined whether an absolute value of the second vehicle steering angle is greater than the preset threshold. When determining that the absolute value of the second vehicle steering angle is greater than the preset threshold, the steering wheel limit signal is triggered so as to limit the rotation angle triggered by the steering wheel.

The steering wheel limit signal is used for limiting the rotation angle triggered by the steering wheel. On triggering of the steering wheel limit signal, the rotation angle of the steering wheel may be limited to the preset threshold. For example, in a case that the preset threshold is 60 degrees for limiting the absolute value of the vehicle steering angle, and the obtained second vehicle steering angle is -70 degrees, whose absolute value exceeds the preset threshold, the steering wheel limit signal is triggered to control the rotation angle triggered by the steering wheel. Thereby, even if the rotation angle triggered actually by the steering wheel is to be -70 degrees, the rotation angle triggered by the steering wheel is limited to -60 degrees when performing vehicle steering.

Based on the above, the rotation angle triggered by the steering wheel can be controlled based on a comparison between the absolute value of the second vehicle steering angle and the preset threshold value. Therefore, an abnormal control due to an excessive rotation angle triggered by the steering wheel can be avoided without installing a limiting sensor, which guarantees the operational reliability of automatic driving.

On the basis of the method for acquiring a vehicle steering angle provided in the above method embodiments, an apparatus for acquiring a vehicle steering angle is further provided in an embodiment of the present disclosure. The apparatus is described below in combination with the drawings.

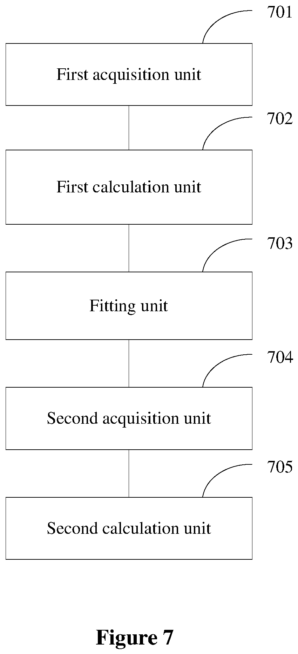

Reference is made to Figure 7, which is a schematic structural diagram of an apparatus for acquiring a vehicle steering angle according to an embodiment of the present disclosure.

A first acquisition unit 701 is configured to acquire test data of a vehicle while the vehicle travels in a preset travel manner, where the test data consists of multiple subsets each including a first steering wheel encoder value, a first vehicle speed, and a first vehicle steering angular rate.

A first calculation unit 702 is configured to calculate, for each subset of the test data, a first vehicle steering angle corresponding to the subset.

A fitting unit 703 is configured to obtain a corresponding relationship between a steering wheel encoder value and the vehicle steering angle by performing a fitting process on the first steering wheel encoder value in each subset of the test data and the first vehicle steering angle corresponding to the subset.

A second acquisition unit 704 is configured to acquire a second steering wheel encoder value while the vehicle travels normally.

The second calculation unit 705 is configured to obtain a second vehicle steering angle corresponding to the second steering wheel encoder value, based on the corresponding relationship between the steering wheel encoder value and the vehicle steering angle.

In an embodiment, the first acquisition unit 701 is specifically configured to acquire, while the vehicle travels in the preset travel manner, the first steering wheel encoder value generated by a steering wheel encoder, the first vehicle speed collected by a satellite positioning module, and the first vehicle steering angular rate collected by a gyro inertial sensor. The first steering wheel encoder value, the first vehicle speed, and the first vehicle steering angular rate acquired at a same time instant constitute a subset of the test data

In an embodiment, the first calculation unit 702 includes: a first calculation sub-unit, a second calculation sub-unit, a third calculation sub-unit, and a first data operation sub-unit.

The first calculation sub-unit is configured to calculate a product of the first vehicle steering angular rate, a circular constant, and a distance between front and rear axles of the vehicle to obtain a first calculation result.

The second calculation sub-unit is configured to multiply the first vehicle speed by 360 to obtain a second calculation result.

The third calculation sub-unit is configured to divide the first calculation result by the second calculation result to obtain a third calculation result.

The first data operation sub-unit is configured to multiplying an arcsine of the third calculation result by 2 to obtain the first vehicle steering angle corresponding to the subset of the test data.

In an embodiment, the apparatus further includes a third acquisition unit, a fourth acquisition unit, a third calculation unit, and a correction amount determination unit.

The third acquisition unit is configured to acquire, while the vehicle travels normally, the second vehicle steering angle in a target time period, where a fluctuation of the second vehicle steering angle during the target time period is within a preset range.

The fourth acquisition unit is configured to acquire a second vehicle speed and a second vehicle steering angular rate in the target time period.

The third calculation unit is configured to calculate a third vehicle steering angle based on the second vehicle speed and the second vehicle steering angular rate.

The correction amount determination unit is configured to determine a vehicle steering angle correction amount based on the second vehicle steering angle in the target time period and the third vehicle steering angle.

In an embodiment, the apparatus further includes a correction unit.

The correction unit is configured to correct, at a time instant subsequent to the target time period, the second vehicle steering angle based on the vehicle steering angle correction amount.

In an embodiment, the third calculation unit includes: a fourth calculation sub-unit, a fifth calculation sub-unit, a sixth calculation sub-unit, and a third data operation sun-unit.

The fourth calculation sub-unit is configured to calculate a product of the second vehicle steering angular rate, a circular constant, and a distance between front and rear axles of the vehicle to obtain a fourth calculation result.

The fifth calculation sub-unit is configured to multiply the second vehicle speed by 360 to obtain the fifth calculation result.

The sixth calculation sun-unit is configured to divide the fourth calculation result by the fifth calculation result to obtain a sixth calculation result.

The third data operation sub-unit is configured to multiply an arcsine of the sixth calculation result by 2 to obtain the third vehicle steering angle.

In an embodiment, the apparatus further includes a limit unit.

The limit unit is configured to trigger a steering wheel limit signal when determining that an absolute value of the second vehicle steering angle is greater than a preset threshold.

According to the embodiments of the present disclosure, the test data of the vehicle is acquired while the vehicle travels in the preset travel manner; for each subset of the test data, the first vehicle steering angle corresponding to the subset is calculated; the corresponding relationship between the steering wheel encoder value and the vehicle steering angle is obtained by performing a fitting process on the first steering wheel encoder value in each subset of the test data and the first vehicle steering angle corresponding to the subset; the second steering wheel encoder value is acquired while the vehicle travels normally; and the second vehicle steering angle corresponding to the second steering wheel encoder value is obtained based on the corresponding relationship between the steering wheel encoder value and the vehicle steering angle. According to the embodiments of the present disclosure, the corresponding relationship between the steering wheel encoder value and the vehicle steering angle is obtained by performing a fitting process on the acquired test data of the vehicle. The second steering wheel encoder value is obtained while the vehicle travels normally. Then the second vehicle steering angle is determined based on the obtained corresponding relationship. Hence, the second vehicle steering angle can be obtained in real time based on the second steering wheel encoder value, instead of measuring the steering angle of the vehicle through a steering angle sensor. Hence, the cost of installation and maintenance of the steering angle sensor can be saved. In addition, the problem of possible failing to acquire the vehicle steering angle normally by an auto-driving system due to a fault of the steering angle sensor can be solved, improving the operational reliability of automatic driving. In addition, with the corresponding relationship between the steering wheel encoder value and the vehicle steering angle, error accumulation due to time integration can be avoided, so that a high accuracy of the vehicle steering angle required by the auto-driving system can be achieved.

A device for acquiring a vehicle steering angle is further provided in an embodiment of the present disclosure. The device includes a memory, a processor, and a computer program stored in the memory and executable by the processor. When executing the computer program, the processor preforms the following method.

The method includes: acquiring test data of a vehicle while the vehicle travels in a preset travel manner, where the test data consists of multiple subsets each including a first steering wheel encoder value, a first vehicle speed, and a first vehicle steering angular rate; calculating, for each subset of the test data, a first vehicle steering angle corresponding to the subset; obtaining a corresponding relationship between a steering wheel encoder value and a vehicle steering angle by performing a fitting process on the first steering wheel encoder value in each subset of the test data and the first vehicle steering angle corresponding to the subset; acquiring a second steering wheel encoder value while the vehicle travels normally; and obtaining a second vehicle steering angle corresponding to the second steering wheel encoder value, based on the corresponding relationship between the steering wheel encoder value and the vehicle steering angle.

In an embodiment, the acquiring test data of a vehicle while the vehicle travels in a preset travel manner includes: acquiring, while the vehicle travels in the preset travel manner, the first steering wheel encoder value generated by a steering wheel encoder, the first vehicle speed collected by a satellite positioning module, and the first vehicle steering angular rate collected by a gyro inertial sensor, where the first steering wheel encoder value, the first vehicle speed, and the first vehicle steering angular rate acquired at a same time instant constitute a subset of the test data.

In an embodiment, the calculating, for each subset of the test data, a first vehicle steering angle corresponding to the subset includes: calculating a product of the first vehicle steering angular rate, a circular constant, and a distance between front and rear axles of the vehicle to obtain a first calculation result; multiplying the first vehicle speed by 360 to obtain a second calculation result; dividing the first calculation result by the second calculation result to obtain a third calculation result; and multiplying an arcsine of the third calculation result by 2 to obtain the first vehicle steering angle corresponding to the subset of the test data.

In an embodiment, the method further includes: acquiring, while the vehicle travels normally, the second vehicle steering angle in a target time period, where a fluctuation of the second vehicle steering angle during the target time period is within a preset range; acquiring a second vehicle speed and a second vehicle steering angular rate in the target time period; calculating a third vehicle steering angle based on the second vehicle speed and the second vehicle steering angular rate; and determining a vehicle steering angle correction amount based on the second vehicle steering angle in the target time period and the third vehicle steering angle.

In an embodiment, the method further includes: correcting, at a time instant subsequent to the target time period, the second vehicle steering angle based on the vehicle steering angle correction amount.

In an embodiment, the calculating a third vehicle steering angle based on the second vehicle speed and the second vehicle steering angular rate includes: calculating a product of the second vehicle steering angular rate, a circular constant, and a distance between front and rear axles of the vehicle to obtain a fourth calculation result; multiplying the second vehicle speed by 360 to obtain a fifth calculation result; dividing the fourth calculation result by the fifth calculation result to obtain a sixth calculation result; and multiplying an arcsine of the sixth calculation result by 2 to obtain the third vehicle steering angle.

In an embodiment, the method further includes: triggering a steering wheel limit signal when determining that an absolute value of the second vehicle steering angle is greater than a preset threshold.

According to the embodiments of the present disclosure, the test data of the vehicle is acquired while the vehicle travels in the preset travel manner; for each subset of the test data, the first vehicle steering angle corresponding to the subset is calculated; the corresponding relationship between the steering wheel encoder value and the vehicle steering angle is obtained by performing a fitting process on the first steering wheel encoder value in each subset of the test data and the first vehicle steering angle corresponding to the subset; the second steering wheel encoder value is acquired while the vehicle travels normally; and the second vehicle steering angle corresponding to the second steering wheel encoder value is obtained based on the corresponding relationship between the steering wheel encoder value and the vehicle steering angle. According to the embodiments of the present disclosure, the corresponding relationship between the steering wheel encoder value and the vehicle steering angle is obtained by performing a fitting process on the acquired test data of the vehicle. The second steering wheel encoder value is obtained while the vehicle travels normally. Then the second vehicle steering angle is determined based on the obtained corresponding relationship. Hence, the second vehicle steering angle can be obtained in real time based on the second steering wheel encoder value, instead of measuring the steering angle of the vehicle through a steering angle sensor. Hence, the cost of installation and maintenance of the steering angle sensor can be saved. In addition, the problem of possible failing to acquire the vehicle steering angle normally by an auto-driving system due to a fault of the steering angle sensor can be solved, improving the operational reliability of automatic driving. In addition, with the corresponding relationship between the steering wheel encoder value and the vehicle steering angle, error accumulation due to time integration can be avoided, so that a high accuracy of the vehicle steering angle required by the auto-driving system can be achieved.

Moreover, a computer-readable storage medium is further provided in an embodiment of the present disclosure. The computer-readable storage medium stores instructions. The instructions, when executed by a terminal device, cause the terminal device to implement the following method.

The method includes: acquiring test data of a vehicle while the vehicle travels in a preset travel manner, where the test data consists of multiple subsets each including a first steering wheel encoder value, a first vehicle speed, and a first vehicle steering angular rate; calculating, for each subset of the test data, a first vehicle steering angle corresponding to the subset; obtaining a corresponding relationship between a steering wheel encoder value and the vehicle steering angle by performing a fitting process on the first steering wheel encoder value in each subset of the test data and the first vehicle steering angle corresponding to the subset; acquiring a second steering wheel encoder value while the vehicle travels normally; and obtaining a second vehicle steering angle corresponding to the second steering wheel encoder value, based on the corresponding relationship between the steering wheel encoder value and the vehicle steering angle.

In an embodiment, the acquiring test data of a vehicle while the vehicle travels in a preset travel manner includes: acquiring, while the vehicle travels in the preset travel manner, the first steering wheel encoder value generated by a steering wheel encoder, the first vehicle speed collected by a satellite positioning module, and the first vehicle steering angular rate collected by a gyro inertial sensor, where the first steering wheel encoder value, the first vehicle speed, and the first vehicle steering angular rate acquired at a same time instant constitute a subset of the test data.

In an embodiment, the calculating, for each subset of the test data, a first vehicle steering angle corresponding to the subset includes: calculating a product of the first vehicle steering angular rate, a circular constant, and a distance between front and rear axles of the vehicle to obtain a first calculation result; multiplying the first vehicle speed by 360 to obtain a second calculation result; dividing the first calculation result by the second calculation result to obtain a third calculation result; and multiplying an arcsine of the third calculation result by 2 to obtain the first vehicle steering angle corresponding to the subset of the test data.

In an embodiment, the method further includes: acquiring, while the vehicle travels normally, a second vehicle steering angle in a target time period, where a fluctuation of the second vehicle steering angle during the target time period is within a preset range; acquiring a second vehicle speed and a second vehicle steering angular rate in the target time period; calculating a third vehicle steering angle based on the second vehicle speed and the second vehicle steering angular rate; and determining a vehicle steering angle correction amount based on the second vehicle steering angle in the target time period and the third vehicle steering angle.

In an embodiment, the method further includes: correcting, at a time instant subsequent to the target time period, the second vehicle steering angle based on the vehicle steering angle correction amount.

In an embodiment, the calculating a third vehicle steering angle based on the second vehicle speed and the second vehicle steering angular rate includes: calculating a product of the second vehicle steering angular rate, a circular constant, and a distance between front and rear axles of the vehicle to obtain a fourth calculation result; multiplying the second vehicle speed by 360 to obtain a fifth calculation result; dividing the fourth calculation result by the fifth calculation result to obtain a sixth calculation result; and multiplying an arcsine of the sixth calculation result by 2 to obtain the third vehicle steering angle.

In an embodiment, the method further includes: triggering a steering wheel limit signal when determining that an absolute value of the second vehicle steering angle is greater than a preset threshold.

According to the embodiments of the present disclosure, the test data of the vehicle is acquired while the vehicle travels in the preset travel manner; for each subset of the test data, the first vehicle steering angle corresponding to the subset is calculated; the corresponding relationship between the steering wheel encoder value and the vehicle steering angle is obtained by performing a fitting process on the first steering wheel encoder value in each subset of the test data and the first vehicle steering angle corresponding to the subset; the second steering wheel encoder value is acquired while the vehicle travels normally; and the second vehicle steering angle corresponding to the second steering wheel encoder value is obtained based on the corresponding relationship between the steering wheel encoder value and the vehicle steering angle. According to the embodiments of the present disclosure, the corresponding relationship between the steering wheel encoder value and the vehicle steering angle is obtained by performing a fitting process on the acquired test data of the vehicle. The second steering wheel encoder value is obtained while the vehicle travels normally. Then the second vehicle steering angle is determined based on the obtained corresponding relationship. Hence, the second vehicle steering angle can be obtained in real time based on the second steering wheel encoder value, instead of measuring the steering angle of the vehicle through a steering angle sensor. Hence, the cost of installation and maintenance of the steering angle sensor can be saved. In addition, the problem of possible failing to acquire the vehicle steering angle normally by an auto-driving system due to a fault of the steering angle sensor can be solved, improving the operational reliability of automatic driving. In addition, with the corresponding relationship between the steering wheel encoder value and the vehicle steering angle, error accumulation due to time integration can be avoided, so that a high accuracy of the vehicle steering angle required by the auto-driving system can be achieved.

It should be noted that embodiments in this specification are described in a progressive manner. Each of the embodiments focuses on differences with other embodiments, and the same and similar parts of the embodiments can be referred to each other. Description of the system and apparatus disclosed in the embodiments is brief, as the system and apparatus correspond to the method disclosed in the embodiments. Reference may be made to corresponding description of the method for details of the system and apparatus.

It should be understood that in the present disclosure, the term "at least one" refers to a quantity of one or more, and the term "multiple" refers to a quantity of two or more. The term "and/or" are used to describe an association of objects, and indicates three possible associations. For example, "A and/or B" may indicate a case of merely A, a case of merely B, and a case of both A and B, where A and B may be in a singular form or a plural form. The symbol "/" generally indicates an "or" relationship between related objects. The expression "at least one of..." or a similar expression refers to "any combination of...", including any combination consisting of a single item or multiple items. For example, "at least one of a, b, or c" may indicate: "a", "b", "c", "a and b", "a and c", "b and c", or "a, b, and c", where a, b, and c may be in a singular form or a plural form.

It should be further noted that, the relational terms such as "first", "second", or the like are only used herein to distinguish one entity or operation from another entity or operation, rather than requiring or implying any actual relationship or order of the entities or operations. Furthermore, terms "include", "comprise" or any variants thereof are intended to be non-exclusive, such that a process, method, article, or device that includes a series of elements include not only those listed elements but also other elements that are not explicitly listed or other elements that are inherent to such process, method, article, or device. Unless expressively limited otherwise, a process, method, article or device limited by "comprising/including a(n) ..." does not exclude existence of another identical element in such process, method, article or device.

The steps of the method described herein in conjunction with the embodiments of the present disclosure may be implemented by hardware, a software module executed by a processor, or a combination thereof. The software module may be stored in a Random Access Memory (RAM), a memory, a Read-Only Memory (ROM), an electrical programmable ROM, an electrically erasable programmable ROM, a register, a hardware disk, a removable magnetic disk, a CD-ROM, or any other forms of storage medium known in the art.

Those skilled in the art may implement or apply the present disclosure based on the above descriptions of the disclosed embodiments. Various modifications to the embodiments are obvious to those skilled in the art, and general principles defined in the present disclosure may be implemented in other embodiments without departing from the spirit or scope of the present application. Therefore, the present disclosure shall not be limited to the embodiments described herein, but have the widest scope that complies with the principle and novelty disclosed in this specification.

**Claims**

1. A method for acquiring a vehicle steering angle, comprising:

   acquiring test data of a vehicle while the vehicle travels in a preset travel manner, wherein the test data consists of a plurality of subsets each comprising a first steering wheel encoder value, a first vehicle speed, and a first vehicle steering angular rate;
   calculating, for each subset of the test data, a first vehicle steering angle corresponding to the subset;
   obtaining a corresponding relationship between a steering wheel encoder value and the vehicle steering angle by performing a fitting process on the first steering wheel encoder value in each subset of the test data and the first vehicle steering angle corresponding to the subset;
   acquiring a second steering wheel encoder value while the vehicle travels normally; and
   obtaining a second vehicle steering angle corresponding to the second steering wheel encoder value, based on the corresponding relationship between the steering wheel encoder value and the vehicle steering angle.

2. The method according to claim 1, wherein the acquiring test data of a vehicle while the vehicle travels in a preset travel manner comprises:

   acquiring, while the vehicle travels in the preset travel manner, the first steering wheel encoder value generated by a steering wheel encoder, the first vehicle speed collected by a satellite positioning module, and the first vehicle steering angular rate collected by a gyro inertial sensor, wherein
the first steering wheel encoder value, the first vehicle speed, and the first vehicle steering angular rate acquired at a same time instant constitute a same subset of the test data.

3. The method according to claim 1 or 2, wherein the calculating, for each subset of the test data, a first vehicle steering angle corresponding to the subset comprises:

calculating a product of the first vehicle steering angular rate, a circular constant, and a distance between front and rear axles of the vehicle to obtain a first calculation result;
multiplying the first vehicle speed by 360 to obtain a second calculation result;
dividing the first calculation result by the second calculation result to obtain a third calculation result; and
multiplying an arcsine of the third calculation result by 2 to obtain the first vehicle steering angle corresponding to the subset of the test data.

4. The method according to claim 1, further comprising:

acquiring, while the vehicle travels normally, the second vehicle steering angle in a target time period, wherein a fluctuation of the second vehicle steering angle during the target time period is within a preset range;
acquiring a second vehicle speed and a second vehicle steering angular rate in the target time period;
calculating a third vehicle steering angle based on the second vehicle speed and the second vehicle steering angular rate; and
determining a vehicle steering angle correction amount based on the second vehicle steering angle in the target time period and the third vehicle steering angle.

5. The method according to claim 4, further comprising:
correcting, at a time instant subsequent to the target time period, the second vehicle steering angle based on the vehicle steering angle correction amount.

6. The method according to claim 4, wherein the calculating a third vehicle steering angle based on the second vehicle speed and the second vehicle steering angular rate comprises:

calculating a product of the second vehicle steering angular rate, a circular constant, and a distance between front and rear axles of the vehicle to obtain a fourth calculation result;
multiplying the second vehicle speed by 360 to obtain a fifth calculation result;
dividing the fourth calculation result by the fifth calculation result to obtain a sixth calculation result; and
multiplying an arcsine of the sixth calculation result by 2 to obtain the third vehicle steering angle.

7. The method according to claim 1, further comprising:
triggering a steering wheel limit signal when determining that an absolute value of the second vehicle steering angle is greater than a preset threshold.

8. An apparatus for acquiring a vehicle steering angle, comprising:

a first acquisition unit, configured to acquire test data of a vehicle while the vehicle travels in a preset travel manner, wherein the test data consists of a plurality of subsets each comprising a first steering wheel encoder value, a first vehicle speed, and a first vehicle steering angular rate;
a first calculation unit, configured to calculate, for each subset of the test data, a first vehicle steering angle corresponding to the subset;
a fitting unit, configured to obtain a corresponding relationship between a steering wheel encoder value and the vehicle steering angle by performing a fitting process on the first steering wheel encoder value in each subset of the test data and the first vehicle steering angle corresponding to the subset;
a second acquisition unit, configured to acquire second steering wheel encoder value while the vehicle travels normally; and
a second calculation unit, configured to obtain a second vehicle steering angle corresponding to the second steering wheel encoder value, based on the corresponding relationship between the steering wheel encoder value and the vehicle steering angle.

9. A device for acquiring a vehicle steering angle, comprising:

a memory,
a processor, and
computer instructions stored in the memory and executable by the processor, wherein
the processor is configured to execute the computer instructions to perform the method for acquiring a vehicle steering angle according to any one of claims 1 to 7.

10. A computer-readable storage medium storing instructions, wherein the instructions, when executed by a terminal device, cause the terminal device to perform the method for acquiring a vehicle steering angle according to any one of claims 1 to 7.

101

102

Auto-driving controller

**Figure 1**

S201

Acquire test data of a vehicle while the vehicle travels in a preset travel manner, where the test data consists of multiple subsets each including a first steering wheel encoder value, a first vehicle speed, and a first vehicle steering angular rate

S202

Calculate, for each subset of the test data, a first vehicle steering angle corresponding to the subset

S203

Obtain a corresponding relationship between a steering wheel encoder value and a vehicle steering angle by performing a fitting process on the first steering wheel encoder value in each subset of the test data and the first vehicle steering angle corresponding to the subset

S204

Acquire a second steering wheel encoder value while the vehicle travels normally

S205

Obtain a second vehicle steering angle corresponding to the second steering wheel encoder value, based on the corresponding relationship between the steering wheel encoder value and the vehicle steering angle

**Figure 2**

**Figure 3**

**Figure 4**

S201

Acquire test data of a vehicle while the vehicle travels in a preset travel manner, where the test data consists of multiple subsets each including a first steering wheel encoder value, a first vehicle speed, and a first vehicle steering angular rate

S202

Calculate, for each subset of the test data, a first vehicle steering angle corresponding to the subset

S203

Obtain a corresponding relationship between a steering wheel encoder value and a vehicle steering angle by performing a fitting process on the first steering wheel encoder value in each subset of the test data and the first vehicle steering angle corresponding to the subset

S204

Acquire a second steering wheel encoder value while the vehicle travels normally

S205

Obtain a second vehicle steering angle corresponding to the second steering wheel encoder value, based on the corresponding relationship between the steering wheel encoder value and the vehicle steering angle

S206

Acquire, while the vehicle travels normally, the second vehicle steering angle in a target time period, where a fluctuation of the second vehicle steering angle during the target time period is within a preset range

S207

Acquire a second vehicle speed and a second vehicle steering angular rate in the target time period

S208

Calculate a third vehicle steering angle based on the second vehicle speed and the second vehicle steering angular rate

S209

Determine a vehicle steering angle correction amount based on the second vehicle steering angle in the target time period and the third vehicle steering angle

**Figure 5**

**Figure 6**

701

First acquisition unit

702

First calculation unit

703

Fitting unit

704

Second acquisition unit

705

Second calculation unit

**Figure 7**

## INTERNATIONAL SEARCH REPORT

| | International application No. |
|---|---|
| | **PCT/CN2020/096281** |

| A. | CLASSIFICATION OF SUBJECT MATTER |
|---|---|
| | B62D 15/02(2006.01)i;  B62D 5/04(2006.01)i |

According to International Patent Classification (IPC) or to both national classification and IPC

| B. | FIELDS SEARCHED |
|---|---|

Minimum documentation searched (classification system followed by classification symbols)

B62D; B60W

Documentation searched other than minimum documentation to the extent that such documents are included in the fields searched

Electronic data base consulted during the international search (name of data base and, where practicable, search terms used)

CNKI, CNPAT, WPI, EPODOC, 北京合众思壮科技股份有限公司, 郭信平, 唐李征, 转向角, 转角, 编码器, 方向盘, 车速, 速度, 速率, 拟合, 对应, steering , turning, deflection, angel, encoder?, coder?, steering wheel, speed, corresponding

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 206187095 U (JIANGSU KING-LIFT MACHINERY CO., LTD.) 24 May 2017 (2017-05-24)<br>    entire document | 1-10 |
| A | US 5135066 A (MITSUBISHI DENKI K. K.) 04 August 1992 (1992-08-04)<br>    entire document | 1-10 |
| A | CN 207832207 U (XI'AN MICROMOTOR RESEARCH INSTITUTE) 07 September 2018 (2018-09-07)<br>    entire document | 1-10 |
| A | CN 106965850 A (HYUNDAI MOBIS CO., LTD.) 21 July 2017 (2017-07-21)<br>    entire document | 1-10 |
| A | CN 203854712 U (HUA, An) 01 October 2014 (2014-10-01)<br>    entire document | 1-10 |
| A | CN 109398482 A (NORTHWEST A&F UNIVERSITY) 01 March 2019 (2019-03-01)<br>    entire document | 1-10 |
| A | CN 203332203 U (NINGBO RUYI JOINT STOCK CO., LTD.) 11 December 2013 (2013-12-11)<br>    entire document | 1-10 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **03 March 2021** | **17 March 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2020/096281** |

**C.      DOCUMENTS CONSIDERED TO BE RELEVANT**

| Category* | Citation of document, with indication, where appropriate, of the relevant passages | Relevant to claim No. |
|---|---|---|
| A | CN 203496981 U (BEIJING RESEARCH CENTER OF INTELLIGENT EQUIPMENT FOR AGRICULTURE) 26 March 2014 (2014-03-26)<br>        entire document | 1-10 |
| A | US 2003019113 A1 (VALEO SCHALTER & SENSOREN G.M.B.H.) 30 January 2003 (2003-01-30)<br>        entire document | 1-10 |

Form PCT/ISA/210 (second sheet) (January 2015)

**INTERNATIONAL SEARCH REPORT**
**Information on patent family members**

International application No.

**PCT/CN2020/096281**

| Patent document cited in search report | | | Publication date (day/month/year) | Patent family member(s) | | | Publication date (day/month/year) |
|---|---|---|---|---|---|---|---|
| CN | 206187095 | U | 24 May 2017 | None | | | |
| US | 5135066 | A | 04 August 1992 | DE | 69000371 | D1 | 12 November 1992 |
| | | | | EP | 0400684 | B1 | 07 October 1992 |
| | | | | KR | 930003589 | B1 | 08 May 1993 |
| | | | | KR | 910000468 | A | 29 January 1991 |
| | | | | JP | H036415 | A | 11 January 1991 |
| | | | | EP | 0400684 | A3 | 27 February 1991 |
| | | | | DE | 69000371 | T2 | 22 April 1993 |
| | | | | EP | 0400684 | A2 | 05 December 1990 |
| | | | | JP | H07117407 | B2 | 18 December 1995 |
| CN | 207832207 | U | 07 September 2018 | None | | | |
| CN | 106965850 | A | 21 July 2017 | CN | 106965850 | B | 30 August 2019 |
| | | | | KR | 20170070901 | A | 23 June 2017 |
| | | | | US | 10093347 | B2 | 09 October 2018 |
| | | | | US | 2017166245 | A1 | 15 June 2017 |
| | | | | DE | 102016224789 | A1 | 14 June 2017 |
| CN | 203854712 | U | 01 October 2014 | None | | | |
| CN | 109398482 | A | 01 March 2019 | None | | | |
| CN | 203332203 | U | 11 December 2013 | None | | | |
| CN | 203496981 | U | 26 March 2014 | None | | | |
| US | 2003019113 | A1 | 30 January 2003 | None | | | |

Form PCT/ISA/210 (patent family annex) (January 2015)